# EUROPEAN PATENT SPECIFICATION

(11) **EP 2 102 790 B1**
(45) Date of publication and mention of the grant of the patent: **15.02.2017**
(21) Application number: 07873495.1
(22) Date of filing: 17.12.2007
(51) Int. Cl.: G07C 9/00, H04L 9/32

(54) **BIOMETRIC SECURITY SYSTEM AND METHOD**
BIOMETRISCHES SICHERHEITSSYSTEM UND -VERFAHREN
SYSTÈME ET PROCÉDÉ DE SÉCURITÉ BIOMÉTRIQUE

(30) Priority: 28.12.2006 US 646825
(43) Date of publication of application: 23.09.2009
(73) Proprietor: Hewlett-Packard Development Company, L.P., Houston, TX 77070 (US)
(72) Inventor: ALI, Valiuddin, Y., Houston, Texas 77070 (US); NOVOA, Manuel, Houston, Texas 77070 (US); PARKER, Jeff, Houston, Texas 77070 (US)
(74) Representative: Zimmermann, Tankred Klaus
(86) International application number: PCT/US2007/025814
(87) International publication number: WO 2008/127323

(56) References cited:
- EP-A2- 1 349 123
- WO-A1-00/36566
- WO-A1-03/049042
- WO-A2-98/50875
- GB-A- 2 401 462
- US-A1- 2005 060 555
- US-B2- 6 694 042
- US-B2- 7 110 576
- US-B2- 7 111 789

## Description

### BACKGROUND

Biometric data, such as fingerprints, a retina scan, facial recognition, voice samples, etc., are used for identification and/or identity verification in security systems. For example, in a fingerprint application, a scanned fingerprint is compared against registered fingerprint references to verify an identity of a user. The process of initially registering a reference fingerprint is often referred to as enrolling. The reference is generally a template, possibly in extensible markup language (XML), which describes features such as ridges and valleys that were extracted from a processed image. However, biometric data, such as fingerprints for a particular user, does not change substantially over time which may be a detriment. If the biometric data is compromised (e.g., spoofing a sensor by using a fingerprint mask, substitution of the template in a matching system with that of another person, etc.), the biometric data cannot be revoked, renewed and/or otherwise changed.

WO 03/049042 A1 discloses a method for accessing data key actuated devices. A user is enrolled by calculating a template from the users fingerprint, wherein the template is an encrypted combination of the fingerprint with a verification code.

WO 98/50875 A2 discloses biometric certificates comprising biometric data, a public key and a digital signature.

The invention provides an improved biometric security method according to claim 1 and an improved biometric security system according to claim 4.

### BRIEF DESCRIPTION OF THE DRAWINGS

For a more complete understanding of the present invention, the objects and advantages thereof, reference is now made to the following descriptions taken in conjunction with the accompanying drawings, in which:
FIG. 1 is a block diagram illustrating an embodiment of a biometric security system;
FIG. 2 is a block diagram illustrating an embodiment of a biometric security token of the biometric security system of FIG. 1;
FIG. 3 is a flow diagram illustrating an embodiment of a biometric security method; and
FIG. 4 is a block diagram illustrating another embodiment of a biometric security system.

### DETAILED DESCRIPTION OF THE DRAWINGS

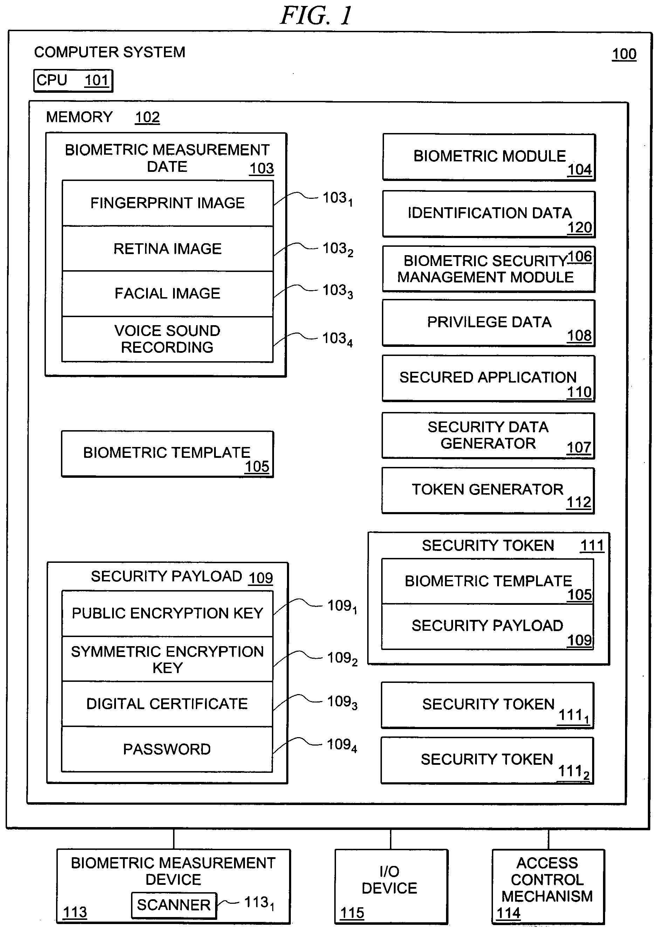

FIG. 1 is a block diagram illustrating an embodiment of a biometric security system 10. In the embodiment illustrated in FIG. 1, biometric security system 10
comprises a computer system 100 coupled to a biometric measurement device 113 and an access control mechanism 114. In the embodiment illustrated in FIGURE 1, biometric measurement device 113 comprises a scanner 113₁; however, it should be understood that biometric measurement device 113 may comprise other types of devices and/or mechanisms for obtaining and/or otherwise acquiring biometric information. In operation, biometric measurement device 113 takes one or more biometric measurements from a user (e.g., a fingerprint, a retina scan, a voice print, a facial image, or other biometric measurement), sends the information to computer system 100 where it is processed by a central processing unit (CPU) 101, stored in a memory 102, and used for either granting or denying a privilege, as described below. However, it should be understood that the biometric measurements may be otherwise processed (e.g., a particular sensor may be configured to perform all computations associated with the biometric measurement information and/or use a special/dedicated companion chip with its own processor, thereby alleviating a need to use CPU 101). One type of privilege that may be granted/denied is the unlocking of a door. However, it should be understood that other physical or non-physical privileges may be granted, denied and/or otherwise controlled based on biometric information. In some embodiments, access control mechanism 114 is used to grant, deny and/or otherwise control such privilege(s).

In FIGURE 1, memory 102 comprises biometric measurement data 103 having information produced and/or otherwise obtained by biometric measurement device 113 (e.g., an image of a fingerprint 103₁, an image of a retina 103₂, an image of a face 103₃, and/or a voice sound recording 103₄) and identification data 120 having information associated with an identity of a particular user (e.g., a user ID). In some embodiments, identification data 120 may be input to computer system 100 via an input/output device 115 (e.g., a keyboard, touch-screen display, mouse, etc.) and may be input by a user at approximately the same time as biometric measurement data 103 is input and/or obtained by biometric measurement device 113. It should be understood that biometric measurement data 103 may be solely used for user identification and/or may be used in combination with identification data 120 for verification of an identity of a user.

In general, biometric security systems use a process known as feature extraction to generate data templates, which are digital data files that may be stored in the extensible markup language (XML) format, from measured biometric data. Features may include locations and sizes of points in an image, such as junction points of ridges and valleys in a fingerprint image. Features extracted from a newly-collected, processed measurement are then compared against the contents of a reference data template in order to determine whether there is a match. In the embodiment illustrated in FIGURE 1, a biometric module 104 executable by CPU 101 (and which may comprise hardware, software, firmware, or a combination thereof) is used to perform the feature extraction by processing biometric measurement data 103 to generate a biometric template 105. It should be understood that biometric module 104 or another feature extraction module may be used for initially producing a biometric reference template 105 (e.g., such as in an initial registration procedure) as well as generating a biometric reference template 105 from later-received biometric measurement data 103 (e.g., that will be used for validation/authorization).

In the embodiment illustrated in FIGURE 1, system 10 comprises a biometric security management module 106 executable by CPU 101 (and which may comprise hardware, software, firmware, or a combination thereof) to perform validation of biometric template 105 (e.g., in response to newly received biometric measurement data 103). In operation, if there is a match (e.g., a match between a biometric template 105 generated from newly acquired biometric measurement data 103 and a previously stored template 105), biometric security management module 106 consults and/or otherwise accesses privilege data 108 which comprises information and/or a listing of privileges which may be granted to the user. For example, in some embodiments, privilege data 108 comprises a list of computer resources the user is authorized to access, such as a secured application 110. In some embodiments, secured application 110 is a computer resource for which access is limited to only authorized users (e.g., computer user account). In some embodiments, biometric security management module 106 directly instructs access control mechanism 114 to provide the desired resource (e.g. unlocking a secured door or entryway for the individual). Thus, in some embodiments, biometric security management module 106 is configured to interface with biometric template 105, and at least one of privilege data 108, secured application 110 and access control mechanism 114. Further, in some embodiments, biometric security management module 106 is configured to perform encryption and/or decryption, as described below.

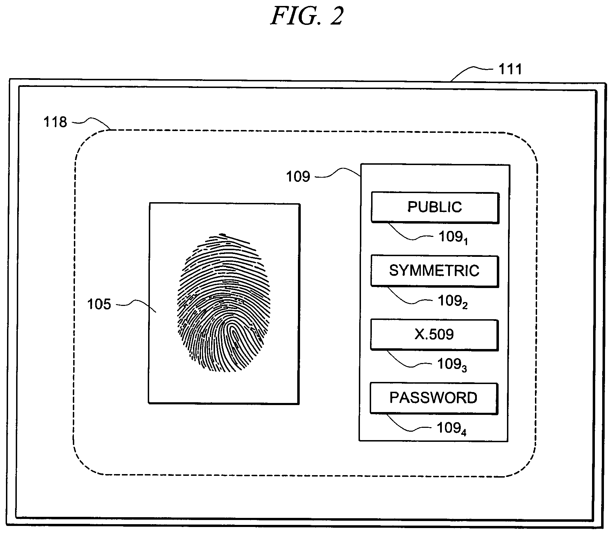

In FIGURE 1, system 10 comprises a security data generator 107 and a token generator 112 each executable by CPU 101 (each of which may comprise hardware, software, firmware, or a combination thereof). Security data generator 107 is used to produce data for a security payload 109, such as a public encryption key 109₁, a symmetric encryption key 109₂, a digital certificate 109₃, a password 109₄, and/or any other security-related data, such as random numbers or strings. Token generator 112 combines biometric template 105 with security payload 109 to produce a security token 111, which is shown with more detail in FIGURE 2. In some embodiments, token generator 112 is configured to encrypt, hash, and/or digitally sign token 111 in order to provide a mechanism for later verifying the integrity of token 111. These integrity verification methods are described in greater detail below in connection with FIGURE 2. In FIGURE 1, multiple security tokens (e.g., tokens 111₁ and 111₂) are illustrated to represent different users of system 10 or multiple biometric data sets for a single user. Preferably, each authorized user has at least one corresponding security token 111. For some embodiments, system 10 has knowledge of the claimed identity of a user, such as user ID 120, in connection with received biometric measurement data 103 to facilitate locating a particular template 105. In other embodiments, biometric security management 106 sequentially, randomly, or otherwise, accesses each available token 111, 111₁ and 111₂ until a match is found or all available tokens 111-111₂ have been accessed.

In some embodiments, security tokens 111₁ and 111₂ use different biometric data for the same person, such as prints from different fingers of the person. In this situation, running token generator 112 multiple times to create additional tokens 111₁-111₂ for a single person may be a privilege listed in privilege data 108. Multiple tokens 111-111₂ for the same person could have either the same security payloads 109 or different payloads 109. For example, token 111₁ could be used for access to secured application 110, whereas token 111₂ could be used by access control mechanism 114 for controlling access to another resource.

It should be understood that the functions performed by computer system 100 may be performed by one or more computers, and all functions need not be performed by a single computer. Further the information stored on computer system 100 may be stored on one or more computers, and need not be stored on a single computer. For example, one computer system 100 may comprise security data generator 107 to produce security payload 109, and another computer system 100 may comprise biometric module 104 for processing biometric measurement data 103 to produce biometric template 105 as well as token generator 112, which combines biometric data 105 and security payload 109 to produce security token 111. Yet another computer system 100 may comprise biometric security management module 106 which matches input from biometric measurement device 113 processed using biometric module 104 with biometric template 105 in security token 111, identifies corresponding privileges using privilege data 108, and sends the relevant portion of security payload 109 to a challenger (e.g., any entity that seeks to determine whether a claim, such as a claimed identity, is valid), such as a local physical access control mechanism 114, local secured application 110, or a remote challenger). A remote challenger could be secured application 110 on yet another computer system 100. It should also be understood the one or more functions performed by computer system 100 may be compartmentalized within a single computer system using various hardware components and/or virtual machines on a single system (e.g., software virtualization).

FIGURE 2 is a diagram illustrating an embodiment of biometric security token 111. Generally, a security token is an entity which provides for verification of content integrity, as well as containing a security payload, such as security payload 109. Security payload 109 contains information that enables the performance of a security function, such as encryption/decryption, trust verification or access control. Examples of security payload information include random numbers or strings useful for deriving keys, keys themselves, and digital certificates, such as an X.509 certificate. X.509 certificates are widely used digital files which contain encryption keys, identification information, and information allowing an indication as to whether the certificate is valid. An X.509 certificate may expire or be revoked prior to the stated expiration date, so that a challenger may determine whether any privileges previously associated with a particular certificate should be withheld. The revocable nature of a digital certificate enables trust verification because if the certificate has been revoked, any data associated with that certificate should not be trusted. However, it should be understood that other types of revocable entities may be used. As used herein, trust verification includes a determination as to whether data used for identification should be trusted. A challenger is any entity that seeks to determine whether a claim, such as a claimed identity, is valid. For example, a password checking program providing a computer login screen is a challenger, as is any device or program which uses the result of a fingerprint match in order to determine whether any privileges should be granted to a person requesting them. For example, secured application 110, shown in FIGURE 1, may be a challenger.

Revocation may be determined by checking a revocation list, preferably publicly in nature (for example, on the Internet), containing serial numbers for certificates that have been reported as revoked. A number appearing on the digital certificate revocation list then assures that the certificate has been revoked. It is important to note that a number not appearing on the list does not assure that the certificate is valid, because among other uncertainties, the list may be out of date or contain errors. At present, some degree of uncertainty regarding validity is unavoidable. Therefore, the correct description of a digital certificate, which is a revocable entity, is that it is able to provide assurances of revocation, rather than being able to provide assurances of validity. Digital certificates are also often issued with expiration dates, but may be renewed, by reissuing the certificate with an annotation in the certificate regarding the expiration date.

Security token 111 comprises a digital file having biometric template 105, shown as a fingerprint template in FIGURE 2 (it should be understood that other biometric data may be used, such as a retina scan, a voice template, a facial recognition template, or other biometric data) and security payload 109. In FIGURE 2, both biometric template 105 and security payload 109 are disposed inside an integrity verification shell 118. In some embodiments, security payload 109 is in tag-length-value (TLV) format, which provides a name of a type of data, the number of bits it requires, and the information itself. For example, TLV data could be "KEY 2_bytes 1001 1011." In some embodiments, biometric data may be stored as template 105 using a data binary large object (BLOB) in XML file format that represents features extracted from the data, rather than merely as an image.

In FIGURE 2, security payload 109 comprises public encryption key 109₁, symmetric encryption key 109₂, digital certificate 109₃, shown as an X.509 certificate, and password 109₄. Symmetric encryption uses the same key for encryption and decryption. Public key encryption uses a publicly-distributed key to encrypt and a different privately-held key to decrypt. Security payload 109 may also comprise other data such as, but not limited to, a digital signature, a random number or string, names, dates, and other encryption keys. A digital signature is a unique series of numbers that allows determination of whether a file has changed, and is described below. Security payload 109 may also include any other information potentially relevant to security, but need not contain all the items shown in FIGURE 2.

All or a portion of security token 111 may be encrypted by token generator 112 using, for example, either public key encryption or symmetric key encryption. Key material may come from within token 111 or from outside token 111 (e.g., from security data generator 107 or held within biometric security management module 106). Digital certificates, such as the X.509, often include a public key that may be used for encryption, although key 109₁ or another key may be used. Decryption may be performed by a matching system, such as biometric security management module 106, if the entire token is encrypted. Certain portions of token 111 may be sent to a challenger in an encrypted state, for example secured application 110, such that only the challenger is able to decrypt them. One scheme, for example, uses layers of encryption/decryption and would encrypt part of security token 111 using symmetric key 109₂, and encrypt symmetric key 109₂ using public key 109₁, or a public key in digital certificate 109₃. One reason for using a method such as this is to speed the decryption process because symmetric encryption is generally faster than public key encryption. Symmetric key 109₂ protects the data, and public key 109₁ then protects the symmetric key 109₂.

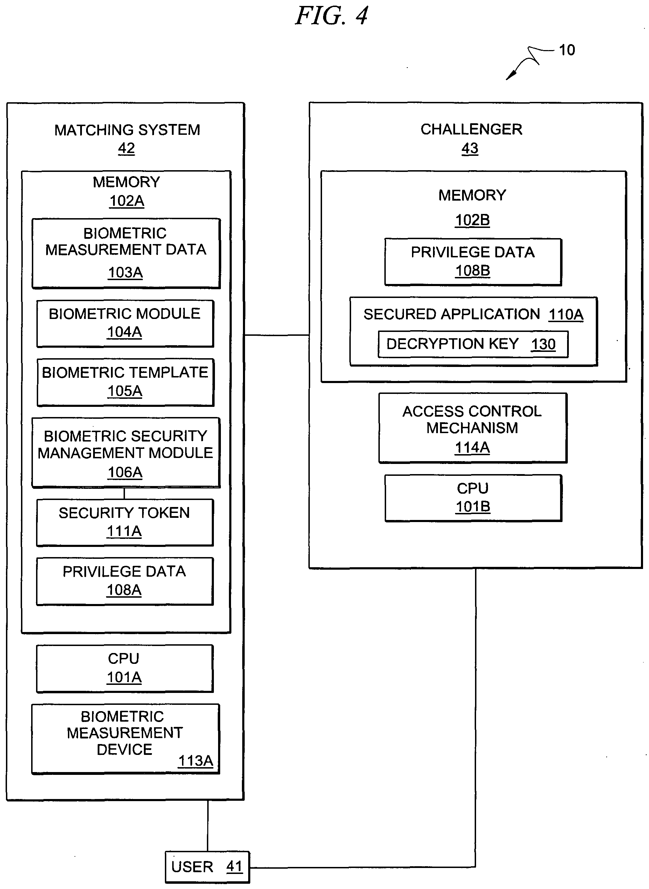

The decryption process for data protected by a combination public key 109₁ and symmetric key 109₂ requires using the private key corresponding to public key 109₁ to first decrypt symmetric key 109₂ and any other portion of security payload 109 encrypted with public key 109₁. The private key may be a decryption key 130 that is stored remotely from security token 111, as is shown in FIGURE 4. After symmetric key 109₂ has been decrypted, it is available for decrypting any portion of security token 111 that remains encrypted, including biometric template 105 and other portions of security payload 109.

If public key encryption is used, in some embodiments, it may be desirable for the challenger to hold the private decryption key. For example, if security payload 109 is to provide password 109₄ to a login page challenger, then password 109₄ may be encrypted such that only the challenger is able to decrypt it. That is, the challenger, such as secured application 110, may hold the decryption key. Biometric template 105 and security payload 109 may be encrypted as part of the encryption of the entire token 111, as well as individually. That is, multiple layers of encryption may be used, which are combinations of the options described above.

Integrity verification shell 118 comprises a digital verification shell so that the integrity of security token 111 is determined using a computer program, such as biometric security management module 106. For example, the decryption of security token 111 provides integrity verification because if there have been any alterations, the decryption process will likely result in errors. Additionally, a cyclic redundancy check (CRC) or hash function may be used for tamper detection. CRCs and hash functions are mathematical operations that return a special number representing the content of a digital file. The special number is compared against an expected value, and if there have been any changes to the file (i.e. the file integrity has been compromised), the calculated number is unlikely to match the expected value. A digital signature is generally the encrypted result of a hash function, which is appended to the information it has signed. In order to verify file integrity, one mathematical procedure is performed on each the information to be verified and another is performed on the digital signature. If either the information or the digital signature has been altered, it is highly unlikely that the results of the mathematical procedures will match. Thus, in some embodiments, security token 111 comprises a digital signature.

In operation, placing biometric template 105 inside integrity verification shell 118 with security payload 109 ties biometric template 105 to the content of security payload 109 (e.g., keys 109₁ and 109₂, digital certificate 109₃ and password 109₄), creating biometric security token 111. That is, since the integrity of biometric template 105 and security payload 109 are jointly verified, neither biometric template 105 nor security payload 109 can be altered by tampering without rendering the other invalid, thereby substantially preventing or eliminating an attack vector of substituting a fingerprint template in order to obtain a match with another person's fingerprint. Also, by storing security payload 109 with biometric template 105, rather than remotely, the attack vector of spoofing an authentication signal to a remote storage location is substantially prevented or eliminated.

Further, embodiments of system 10 enable biometric template 105 to be readily revocable by placing a revocable entity (e.g., digital certificate 109₃) in security payload 109. For example, because a revocable entity is inside the same integrity verification shell 118 as biometric template 105, revocation of the entity causes revocation of the entire security token 111, including biometric template 105. Thus, in the event that a security token 111 is created for each of multiple fingers, the biometric data portion (e.g., template 105) would be different reflecting the difference in the prints of each finger. The security payload portion 109 may be similar or different. That is, each token 111 could contain identical payloads 109, a payload 109 specific to each finger, or be a combination thereof. If the payloads 109 are different, then different fingers could be used for different purposes, such as access to different secure resources. Further, embodiments of system 10 enable enrolling multiple fingers or reenrolling a particular finger at a later time by requiring both a match with a previously registered finger as well as a determination that the digital certificate 109₃ associated with the prior enrollment is still valid.

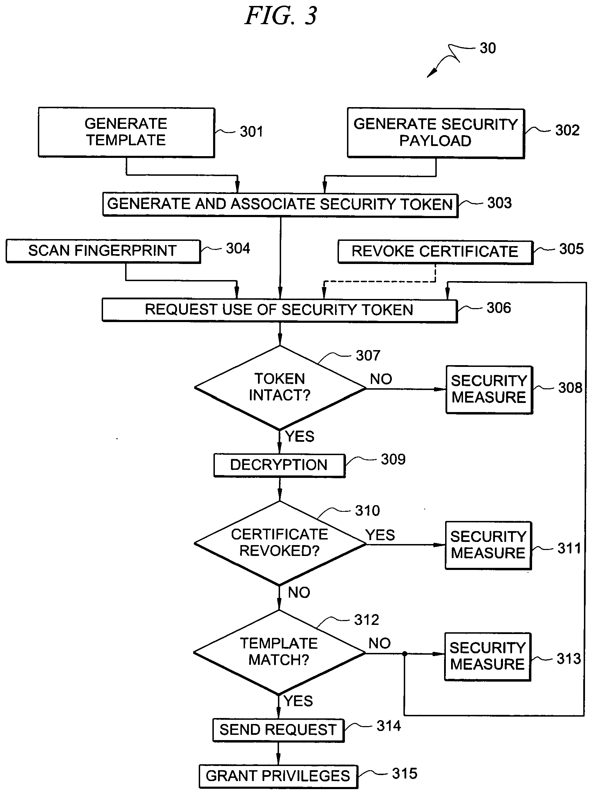

FIGURE 3 is a flow diagram illustrating an embodiment of a biometric security method 30. At block 301, biometric template 105 is generated (e.g., a fingerprint template). A scanner, similar to scanner 222, may be used to collect the biometric information. Security payload 109 is generated at block 302 (e.g., which may include generating a password or obtaining a digital certificate and encryption keys from a security service provider). At block 303, biometric template 105 and security payload 109 are formed into security token 111, thereby by enabling joint integrity verification. The integrity verification for security token 111 could use a CRC, a hash, a digital signature, or encryption, as discussed above in connection with FIGURES 1 and 2. The generated security token 111 is associated with a privilege at block 303 (e.g., as indicated by privilege data 108 (FIGURE 1)) that will be desired at a later time by either including the information necessary to access that privilege, such as a password necessary to access a login privilege, or by loading the security token into a matching device that is coupled to a specific challenger such as an electric door lock. In this latter case, the privilege desired is physical access, and loading the security token onto a specific matching device is then a way of forming the necessary association with the privilege.

In operation, when a user wishes to access a privilege(s), a fingerprint, for example, is scanned and input to a matching system (e.g., a system used to validate or authenticate the biometric input). The matching system, receiving the input biometric data, then detects a request to use security token 111 for identification at block 306. Before using security token 111 to grant privileges, a number of security checks are performed. In the embodiment illustrated in FIGURE 3, these security checks comprise verifying security token 111 integrity at block 307, determining whether a digital certificate 109₃ has been revoked at block 310, and comparing/matching the biometric template 105 at block 312.

At block 307, token 111 integrity verification is performed using decryption at block 309 as an indication of integrity. It should be understood that another method may be used in addition to or in place of decryption such as, but not limited to, a CRC, hash function or digital signature. If any of security checks depicted at blocks 307 or 310 fails, one of security measures depicted at blocks 308 or 311 is performed. If the security check depicted at block 312 fails, then a security measure depicted at block 313 is performed or the method may return to block 306 and request the use of another token 111 to look for a match. How method 30 reacts to a failure of check 312 is an implementation choice. Security measures 308, 311 and 313 may comprise denying a privilege(s), sending a notification to a security monitor, deleting data, or any other security measure useful in responding to an improper attempt to gain the privileges sought.

If all the security checks depicted at blocks 307, 310 or 312 pass, then at block 314, the matching system sends a request for privileges or an authorization signal to a challenger. In some embodiments, the request includes any portion of the security payload 109 that are necessary for the challenger to grant the privileges. Further, in some embodiments, the request is encrypted. At block 315, the challenger decrypts the request and, if the request is valid, grants the requested privilege(s). The validity of the request may be determined by whether it decrypts properly, or by whether it contains the proper information. For example, the request may contain a login password, such as password 109₄. If the challenger is a login screen, then the validity of password 109₄ may be determined by a password check.

A determination of which privileges to grant the user is made by the matching system at blocks 307-314, or by the challenger at block 315, or in tandem by a combination thereof. For example, as discussed above, if any of the security checks depicted at blocks 307, 310 or 312 fail, the privilege(s) will be denied or grant no privilege. Additionally, if the request sent at block 314 is improper, such as an incorrect password 109₄ being stored in the security payload 109, then a denial of privileges will result. However, if all security checks pass, then the privilege granted will be one associated with the security token 111.

Method depicted in FIGURE 3 may be iterated by restarting at block 304 any number of times. An alternative scenario occurs if, at block 305, the user desires to revoke the certificate 109₃ for the security token 111 generated at blocks 301-303. For example, the reasons for revoking include, but are not limited to, user suspicion about biometric compromise, or the withdrawal of the privileges, such as a person being locked out of a facility. Revocation may be permanent or temporary, based on the management methods of the digital certificate used. In this scenario, the method depicted in FIGURE 3 will end with security measure depicted at block 311 and will not reach block 314. If this is a permanent revocation, the effect is that the security token 111 generated at blocks 301-303 is permanently revoked. Thus, a fingerprint or any other biometric data provided at block 301 has become revocable.

FIGURE 4 is a diagram illustrating another embodiment of biometric security system 10 comprising a user 41 and a matching system 42 connected to a challenger 43. In the embodiment illustrated in FIGURE 4, matching system 42 and challenger 43 each hold a different subset of the elements of system 10 of FIGURE 1. The subsets of elements are tailored for the specific function, either matching biometric data or granting privileges to user 41.

In FIGURE 4, matching system 42 comprises biometric measurement data 103A, biometric module 104A, biometric template 105A, biometric security management module 106A, at least one token 111A and privilege data 108A, which are shown in memory 102A, CPU 101A and biometric measurement device 113A. User 41 uses biometric measurement device 113A to generate biometric measurement data 103A which is then processed by biometric module 104A using CPU 101A to generate biometric template 105A. Biometric security management module 106A compares biometric template 105A to biometric template information disposed inside token 111A. If there is a match, then privilege data 108A is accessed to determine and/or otherwise identify privileges available to user 41. Alternatively, a connection between matching system 42 and challenger 43 facilitates storage of privilege data 108B in challenger 43 such that, based upon a successful match between biometric template 105A and the biometric template information within token 111A, an authorization or request is sent from matching system 42 to challenger 43.

Challenger 43 comprises memory 102B, holding secured application 110A which runs on CPU 101B, and privilege data 108B. In some embodiments, secured application 110A holds a decryption key 130 to decrypt the request or authorization signal sent by matching system 42. In some embodiments, challenger 43 comprises physical access control 114A. If challenger 43 is capable of granting only a single privilege, then privilege data 108B may be unnecessary because sending an authorization from matching system 42 to challenger 43 then determines that the one privilege challenger 43 may grant is the one that is granted to user 41. The privileges granted may include the right to enroll additional biometric information, such as creating a new security token for the same or different finger, physical access, such as a door unlocking, access to computer resources such as login or execution of a program, and no privileges, which is essentially a withholding of privileges.

Thus, embodiments of system 10 enable use of biometric data for security-related purposes while also enabling revocation of the biometric data by using, for example, a digital certificate. Further, embodiments of system 10 are configured to combine and/or otherwise embed different types of security-related information with the biometric data such as, for example, encryption/decryption keys and passwords. It should be understood that in the described method, certain functions may be omitted, accomplished in a sequence different from that depicted in FIGURE 3, or simultaneously performed. Also, it should be understood that the method depicted in FIGURE 3 may be altered to encompass any of the other features or aspects of the invention as described elsewhere in the specification. Further, embodiments of the present invention may be implemented in software and can be adapted to run on different platforms and operating systems. In particular, functions implemented by biometric module 104, biometric security management module 106, security data generator 107 and/or token generator 112, for example, may be provided as an ordered listing of executable instructions that can be embodied in any computer-readable medium for use by or in connection with an instruction execution system, apparatus, or device, such as a computer-based system, processor-containing system, or other system that can fetch the instructions from the instruction execution system, apparatus, or device, and execute the instructions. In the context of this document, a "computer-readable medium" can be any means that can contain, store, communicate, propagate or transport the program for use by or in connection with the instruction execution system, apparatus, or device. The computer-readable medium can be, for example, but is not limited to, an electronic, magnetic, optical, electro-magnetic, infrared, or semi-conductor system, apparatus, device, or propagation medium.

## Claims

1. A biometric security method, comprising:
receiving a security token (111) comprising biometric information (105) combined with a security payload (109), wherein the security payload (109) comprises a symmetric encryption key (109₂) encrypted using a public key (109₁) and a revocable entity;
verifying integrity of the biometric information (105) using the security payload (109) using decrypting at least a portion of the security token (111) using the security payload (109), wherein decrypting comprises using a private key corresponding to the public key (109₁) to decrypt the symmetric encryption key (109₂) and using the symmetric encryption key (109₂) to decrypt a portion of the security token (111) that remains encrypted; and
determining whether the revocable entity (109₃) has been revoked.

2. The method of claim 1 further comprising receiving the security token (111) further having at least one of the public key (109₁) and a password (109₄) in the security payload (109).

3. The method of claim 1 wherein the revocable entity (109₃) is a digital certificate (109₃).

4. A biometric security system (10), comprising:
a token generator (112) executable by a processor (101) and configured to combine biometric information (105) with a security payload (109) to form a security token (111), the security payload (109) usable to verify integrity of the biometric information (105),
wherein the security payload (109) comprises a symmetric encryption key (109₂) and a revocable entity (109₃), wherein the token generator (112) is configured to encrypt at least a portion of the security token (111) using the symmetric encryption key (109₂), and wherein the token generator (112) is configured to encrypt the symmetric encryption key (109₂) using a public key (109₁).

5. The security system (10) of claim 4 wherein the security payload (109) further comprises at least one of the public key (109₁) and a password (109₄).

6. The security system (10) of claim 4 wherein the revocable entity (109₃) is a digital certificate (109₃).

## Patentansprüche

1. Biometrisches Sicherheitsverfahren, Folgendes umfassend:
Empfangen eines Sicherheitstokens (111), umfassend biometrische Informationen (105) in Kombination mit einer Sicherheitsnutzlast (109), wobei die Sicherheitsnutzlast (109) einen symmetrischen Verschlüsselungsschlüssel (109₂), verschlüsselt mit einem öffentlichen Schlüssel (109₁), und eine widerrufbare Entität umfasst;
Verifizieren der Integrität der biometrischen Informationen (105) unter Einsatz der Sicherheitsnutzlast (109) durch Entschlüsseln wenigstens eines Teils des Sicherheitstokens (111) unter Einsatz der Sicherheitsnutzlast (109), wobei das Entschlüsseln das Verwenden eines dem öffentlichen Schlüssel (109₁) entsprechenden privaten Schlüssels zum Entschlüsseln des symmetrischen Verschlüsselungsschlüssels (109₂) und das Verwenden des symmetrischen Verschlüsselungsschlüssels (109₂) zum Entschlüsseln eines Teils des Sicherheitstokens (111), das verschlüsselt bleibt, umfasst; und
Bestimmen, ob die widerrufbare Entität (109₃) widerrufen worden ist.

2. Verfahren nach Anspruch 1, ferner umfassend das Empfangen des Sicherheitstokens (111), das ferner den öffentlichen Schlüssel (109₁) und/oder ein Kennwort (109₄) in der Sicherheitsnutzlast (109) aufweist.

3. Verfahren nach Anspruch 1, wobei die widerrufbare Entität (109₃) ein digitales Zertifikat (109₃) ist.

4. Biometrisches Sicherheitssystem (10), Folgendes umfassend:
einen Tokengenerator (112), ausführbar durch einen Prozessor (101) und konfiguriert, biometrische Informationen (105) mit einer Sicherheitsnutzlast (109) zu kombinieren, um ein Sicherheitstoken (111) auszubilden, wobei die Sicherheitsnutzlast (109) nutzbar ist, um die Integrität der biometrischen Informationen (105) zu verifizieren,
wobei die Sicherheitsnutzlast (109) einen symmetrischen Verschlüsselungsschlüssel (109₂) und eine widerrufbare Entität (109₃) umfasst, wobei der Tokengenerator (112) konfiguriert ist, wenigstens einen Teil des Sicherheitstokens (111) unter Einsatz des symmetrischen Verschlüsselungsschlüssels (109₂) zu verschlüsseln, und wobei der Tokengenerator (112) konfiguriert ist, den symmetrischen Verschlüsselungsschlüssel (109₂) unter Einsatz eines öffentlichen Schlüssels (109₁) zu verschlüsseln.

5. Sicherheitssystem (10) nach Anspruch 4, wobei die Sicherheitsnutzlast (109) ferner den öffentlichen Schlüssel (109₁) und/oder ein Kennwort (109₄) umfasst.

6. Sicherheitssystem (10) nach Anspruch 4, wobei die widerrufbare Entität (109₃) ein digitales Zertifikat (109₃) ist.

## Revendications

1. Procédé de sécurité biométrique, comprenant :
la réception d'un jeton de sécurité (111) comprenant des informations biométriques (105) combinées à des données utiles de sécurité (109), dans lequel les données utiles de sécurité (109) comprennent une clé de chiffrement symétrique (109₂) chiffrée au moyen d'une clé publique (109₁) et une entité révocable ;
la vérification de l'intégrité des informations biométriques (105) au moyen des données utiles de sécurité (109) au moyen du déchiffrement d'au moins une partie du jeton de sécurité (111) au moyen des données utiles de sécurité (109), dans lequel le déchiffrement comprend l'utilisation d'une clé privée correspondant à la clé publique (109₁) pour déchiffrer la clé de chiffrement symétrique (109₂) et au moyen de la clé de chiffrement symétrique (109₂) pour déchiffrer une partie du jeton de sécurité (111) qui reste chiffrée ; et
la détermination du fait que l'entité révocable (109₃) a été révoquée.

2. Procédé selon la revendication 1 comprenant en outre la réception du jeton de sécurité (111) ayant en outre au moins l'un des éléments parmi la clé publique (109₁) et un mot de passe (109₄) dans les données utiles de sécurité (109).

3. Procédé selon la revendication 1 dans lequel l'entité révocable (109₃) est un certificat numérique (109₃).

4. Système de sécurité biométrique (10), comprenant :
un générateur de jetons (112) exécutable par un processeur (101) et conçu pour combiner des informations biométriques (105) à des données utiles de sécurité (109) pour former un jeton de sécurité (111), les données utiles de sécurité (109) utilisables pour vérifier l'intégrité des informations biométriques (105),
dans lequel les données utiles de sécurité (109) comprennent une clé de chiffrement symétrique (109₂) et une entité révocable (109₃), dans lequel le générateur de jetons (112) est conçu pour chiffrer au moins une partie du jeton de sécurité (111) au moyen de la clé de chiffrement symétrique (109₂), et dans lequel le générateur de jetons (112) est conçu pour chiffrer la clé de chiffrement symétrique (109₂) au moyen d'une clé publique (109₁).

5. Système de sécurité (10) selon la revendication 4 dans lequel les données utiles de sécurité (109) comprennent en outre au moins l'un des éléments parmi la clé publique (109₁) et un mot de passe (109₄).

6. Système de sécurité (10) selon la revendication 4 dans lequel l'entité révocable (109₃) est un certificat numérique (109₃).
